# EUROPEAN PATENT APPLICATION

(11) **EP 1 130 073 A1**
(43) Date of publication of application: **05.09.2001**
(21) Application number: 01200712.6
(22) Date of filing: 26.02.2001
(51) Int. Cl.: C09K 3/00, E02B 15/04

(54) **A procedure for the removal and collection of hydrocarbons, a product to be used in the procedure, and procedure for embodying the product and the use of the same in the procedure**

(30) Priority: 29.02.2000 AR 0000890
(71) Applicant: R. Ciancaglini y Asociados, S.A., 1012 Capital Federal (AR)
(72) Inventor: Ciancaglini, Ricardo Horacio, 1642 San Isidro - Pcia. de Buenos Aires (AR); Mazzeo, Francisco Antonio, 1642 San Isidro - Pcia. de Buenos Aires (AR); Chiesa, Luis Oscar, 1642 San Isidro - Pcia. de Buenos Aires (AR)
(74) Representative: Davila Baz, Angel

(57) **Abstract**

1. Purpose of the invention: A procedure for the removing and collection of spilled hydrocarbons that does not contaminate the environment with its application and which is economical.
2. Characteristics of the invention: Bird feathers are scattered over the polluted surface on which there are non-polar or low density substances, the feathers are allowed to act until they are saturated with the substances and the saturated feathers are collected. Unlike chemical dispersants, the feathers avoid contamination at the time of their application, and the costs are lower with respect to the methods commonly employed.
3. Field of application: Solid or liquid surfaces that have undergone hydrocarbon pollution produced by an oil spill.
4. Alternatives: None exist.
5. Example: The feathers are located inside a mesh of open weave and then said meshes are laid on the surface contaminated with hydrocarbons to be treated, after absorption of the hydrocarbons on the part of the feathers, said meshes are withdrawn and their recycling takes place.

## Description

The present invention relates to a procedure for the removal and collection of hydrocarbons, a product to be used in the procedure, a procedure for embodying the product and the use thereof in the procedure, and more precisely it relates to the removal and collection of oil spills occurring on solid or liquid surfaces, or even those contained in liquid masses, for example due to accidents and/or sinking of tanker ships on rivers, seas and oceans, or spills on land from tanker trucks, etc.

Everyone is familiar with the disasters produced by oil spills caused by tankers, such as the oil tanker VALDEZ of the EXXON company. In March 1989, the VALDEZ ran aground on a sand bank in Alaska, spilling more than 232,000 barrels of crude oil. The effects of the incident are still not known in their entirety, however it is known that only 25% of the migratory salmon returned to the area of the accident the following year, thousands of sea otters were poisoned and thousands of sea birds perished. This was only one of the hundreds of cases of oil spillage that occur on the high seas.

The most effective method for cleaning up the oil slicks from the ocean, is that of gathering the oil together. This characteristic not only removes the oil from the sea, but also, as well, it can be recovered for use. The first step in gathering up the oil is to surround the slick with a floating barrier which can comprise an inflatable boom which has a membrane that retains the spilled oil and said membrane includes in its base a chain to keep it straight. On the other hand, the inflatable boom can be replaced with an absorbent material which acts like a sponge, and can be of a natural material like for example straw, or of a synthetic material like for example polypropylene.
In the case of the inflatable barrier, this, as well as being costly, does not withstand damage produced by rocks or the like and in the event of tearing or breakage, the oil leaks out through said tear or breakage. Moreover, in the case of employing absorbent materials, these, on absorbing the oil, also absorb large quantities of water, it being possible for water to represent 90% of the liquid absorbed. Moreover, said absorbent materials are not suitable for absorbing large amounts of oil and their use is restricted to small spills or pockets remaining from large spills.

Likewise, given that one of the main problems in oil pollution is that oil slicks remain together and float on the surface of the water, chemical products, generally termed dispersants, have been developed, which can be spread on the oil slicks to divide up a large slick into smaller ones, which are diluted into the water without causing greater harm. Nevertheless, due to the way these chemical dispersants work, they cannot be employed on thick or viscous oils, in which are included some crude oils and all heavy fuel oils. In addition, the majority of crude oils capable of being dispersed, change their properties after being a few hours in cold water and cannot be dispersed, for which reason the application of said dispersant must be carried out straightaway by means of helicopters, which are not always available in the vicinity of the spill.

Scientists have also developed a new type of dispersant which consists mainly of micro-organisms. This type of oil removal is termed bioremediation, in which the oil can be degraded biologically by a great variety of micro-organisms among which are to be found the pseudomonas, various corinebacteria and micro-bacteria, and even some yeasts.

In the elimination of oil spills, the micro-organisms work by oxidising the oil to CO₂. When large oil spills occur, the volatile hydrocarbon fractions quickly evaporate, leaving the long chain, aliphatic and aromatic components to be eliminated by the organisms.

Theses dispersants, however, contain contaminating components, for which reason, before they are used, consideration must be given to the depth of the water where the spill is located, the strength of the currents, and what type of sea life is present in the zone in question. Also, these dispersants are very expensive, and, by way of example, it can be remarked that the EXXON company has spent more than 1.5 billion dollars in cleaning up the oil spilled from the VALDEZ using bioremedial processes.

In response to the VALDEZ incident, as a solution to apply to oil spills, the United States' oil pollution act has dictated that all new oil tankers are to built with double hulls in order that, in the event of the ship colliding with some object, only the outer hull is punctured, and spillage is avoided. A further measure taken, in the event of spillage should the ship be punctured, is to have the tank fitted with hydrostatic controls whereby the internal pressure of the tank is made the same as the external pressure, preventing the oil from running out. These measures are however very expensive to implement and, since they are only voluntary, they have not been taken up extensively by shipbuilders.

It is therefore an object of the present invention to provide a procedure for removing and collecting spilled hydrocarbons that does not pollute the environment when applied and is economical.

It is a further object to provide a procedure for the removal and collecting of spilled hydrocarbons that only absorbs the hydrocarbons, without absorbing water or other components.

It is therefore an object of the present invention to provide a procedure for the removal and collection of hydrocarbons spilled on solid or liquid surfaces polluted with said hydrocarbons, wherein said procedure comprises the steps of: scattering bird feathers over the surface on which non-polar or low density substances are present, permitting the feathers to act until saturated with said substances and gathering up said saturated feathers.

For greater clarity and understanding of the present invention, it has been illustrated in several figures, in which said invention is shown in some of the preferred forms of embodiment, all by way of example, wherein:
Figure 1 is a top view, in perspective, which illustrates a product of the invention consisting of feathers within a mesh;
Figure 2 is an illustration of the application of the product of the invention for the absorption of hydrocarbons object of the present invention.

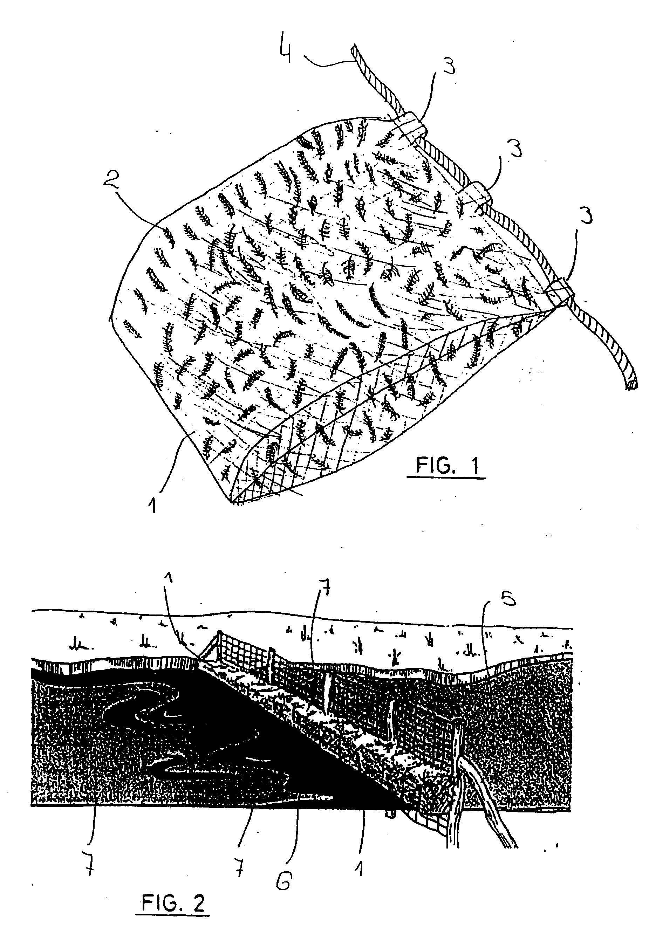

With reference first to figure 1 a suitably woven mesh 1 can be observed, which holds a plurality of feathers 2. Said mesh has various eyelets 3, though which is passed a rope or chain 4, in order to be able to join adjacent meshes 1 and/or fasten it to a boom 5 such as is shown in figure 2, or to a boat for their transport and subsequent removal (not shown).

In figure 2 it is possible to appreciate how the feathers 2 held in the mesh 1 perform the function of absorbing the oil slick 6 spilled on the water 7.

Once said feathers 2 are saturated with oil, the meshes 1 are withdrawn and, in the case of oil slicks remaining, replaced with new meshes 1.

For a better understanding of why feathers 2 are used for the absorption of oil slicks 5, there follows a brief outline of the properties and characteristics of the feathers and how they are obtained.

The feathers are the most important features of bird skins, however there exists a large, clearly visible, cutaneous structure, called the uropygial gland, located on the rump at the base of the tail which produced an oily secretion that is spread by the birds over their feathers with the peak when preening. This gland is particularly well developed in aquatic birds, and the secretion therefrom is important in that it renders the feathers waterproof.

The use of bird feathers for the absorption of spilled oil slicks, is based on the absorption capacity which the feather offers for non-polar or low polarity substances, such as hydrocarbons. This property is known as oleophilia, which contains between 4 and 8% animal fat, due to the uropygial gland described above, it being said fat which has the oleophilic characteristic.

The feathers with this animal fat and subjected to various treatments, are capable of absorbing hydrocarbons to between 4 and 5 times their own weight, this sorbent feature being favoured in the feather 2 thanks to its extensive contact area. Although the feather has an oleophilic nature, it is not entirely hydrophobic, being capable of absorbing up to 0.25 parts water for each part feather. This, when compared with the known methods of absorption, such as those already mentioned, is a highly appreciated feature.

Said feather 2 is obtained mainly from the aviculture industry where, up to this time, these feathers were considered to be waste with no other use whatsoever. Given that said feather 2 after being plucked from the bird, enters a rancidification process of its fatty part and putrification of its proteinic part, before using it for oil slick absorption, it is preferable to subject them to a conditioning treatment which includes washing and drying. Optionally the feathers can undergo a combing, or carding, process. This prior conditioning of the feathers 2 is termed biological stabilisation and permits the subsequent use of the feathers in an optimum state for the absorption of oil slicks. As a final step, after the removal of the spilled oil, it is possible to proceed to its final disposal in incinerating furnaces adapted to bum it, or it can be recycled in order to re-employ the oil in question. The already saturated feathers can also be buried or encapsulated, in accordance with governmental regulations concerning ecology and waste disposal.

It is to be pointed out that said feathers 2, in this preferred embodiment, are situated inside this open-woven mesh 1, which does not imply a limitation to the same, it being possible to arrange it in the form of blankets, cut and bound by a binding element which does not impair their sorbent property, or simply scattering them from the air in large quantities to be later gathered up by oil slick collection machines, such as the ship AL WASSIT, which can skim more than 1.6 square kilometres per day.

Finally, from that described above, it can be deduced that the object of the present invention, not only improves the activity of removing slicks of spilled oil for its low cost, but also, in addition, by containing entirely natural products, has no restrictions with respect to areas of use, or run risks of increasing the ecological impact caused by an oil spill.

## Claims

1. A procedure for removal and collection of hydrocarbons spilled on or contained in liquids or solids polluted with said hydrocarbons, **characterised in that** it comprises the steps of:
scattering bird feathers over said surface on which are to be found non-polar or low density substances;
leaving the feathers to act until saturated with said substances;
collecting said saturated feathers.

2. A product to be employed with the procedure of claim 1, **characterised in that** it is comprised on bird feathers.

3. A product in accordance with claim 2, **characterised in that** said bird feathers have a capacity to absorb hydrocarbons of the order of 4 to 5 times their weight.

4. A product in accordance with claim 2, **characterised in that** said bird feathers are treated by means of biological stabilisation.

5. A product in accordance with claim 4, **characterised in that** said biological stabilisation comprises the washing, drying and carding of the bird feathers.

6. A product in accordance with claim 3, **characterised in that** said bird feathers define layers for application on said polluted surfaces.

7. A product in accordance with claim 5, **characterised in that** said layers are defined by compacting said feathers contained in a mesh.

8. A product in accordance with any of the previous claims, **characterised in that** said feathers contain between 4% and 8% of animal fats.

9. A procedure for preparing the product of claim 2, **characterised in that** it is comprised of the steps of: collecting feathers, washing them and drying them until a feather is obtained with an animal fat content of between 4% and 8% by weight and an absorption capacity of the order to 4 to 5 times its weight.

10. A procedure in accordance with claim 9, **characterised in that** after the washing and the drying the feathers are carded.

11. The use of the product of claim 2, **characterised in that** it is applied to the recovery of hydrocarbons spilled on solid or liquid surfaces.
